# DEMANDE DE BREVET EUROPEEN

(11) **EP 1 306 743 A2**
(43) Date de publication de la demande: **02.05.2003**
(21) Numéro de dépôt: 02257341.4
(22) Date de dépôt: 23.10.2002
(51) Int. Cl.: G06F 3/033, H04N 5/445

(54) **Menu-Driven electronic apparatus configuration**

(30) Priorité: 29.10.2001 KR 2001066850
(71) Demandeur: SAMSUNG ELECTRONICS CO., LTD., Suwon-City, Kyungki-do (KR)
(72) Inventeur: Seo, Byung-ryul, Yongin-city, Gyunggi-do (KR)
(74) Mandataire: Geary, Stuart Lloyd

(57) **Abstract**

An electronic apparatus uses a system of concurrently displayed hierarchical menus (30, 31) for enabling a user to configure it.

## Description

The present invention relates to an electronic apparatus having a control means, a display and user input means, the control means being responsive to operation of the user input means to display a configuration menu on the display and to configure the apparatus in response to operation of the user input means to select a menu item and to set a configuration parameter value.

Generally, when electronic devices are being operated and the operation of the device is to be changed, a user has to select the function to be changed and adjust the status of that function as desired to thus change the operation and control of the device. Therefore, conventional electronic devices typically have a control panel that a user can access to control the electronic devices. The control panel will generally have one or more key inputs that enable the user to input commands by manipulating the key inputs. Also, a conventional electronic device may have a display window so that the user can confirm the operational status and the control status of the device by viewing items in the display window representing the operational and control status of the device.

Because the sizes of electronic devices have recently become smaller and compactness of design is considered more important than ever before, the number of buttons or key inputs for a device need to be reduced. In particular, conventional electronic devices having many functions have numerous buttons for operation and control of the functions. It is desirable to eliminate as many buttons as possible while still maintaining the capability of controlling and changing the functions of the device as desired. However, due to this need to reduce the number of buttons, problems relating to the design of the electronic devices, as well as to production cost, can arise and the overall structure of the devices can become more complicated. In an attempt to avoid these problems, the devices can employ on-screen display (OSD) functionality so that an OSD menu replaces the buttons.

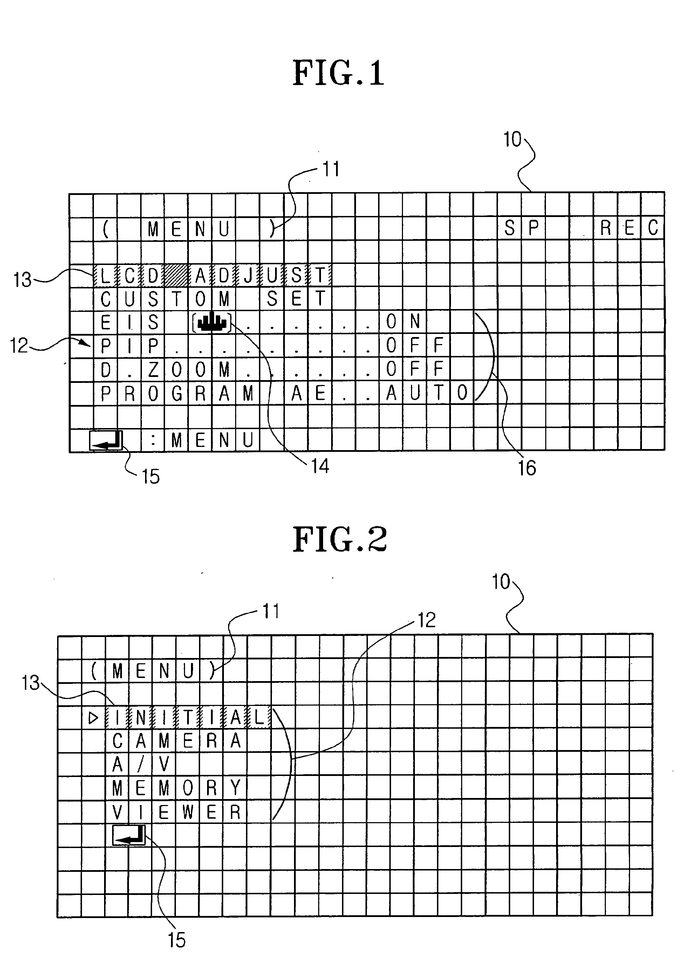

Figures 1 and 2 are views of the display unit 10 of a camcorder employing a function set-up technique which uses a conventional OSD menu. As shown in Figure 1, a menu 12 for setting or changing functions of the conventional electronic device displays a menu list which divides the functions. Therefore, when the user places a cursor 15 on an item representing a desired function of the camcorder by moving the cursor 15 on the display screen, and then inputs an enter signal, the function is turned on or off, or, if the function has several function options, the screen is changed to display a subsidiary menu, which is commonly referred to as a "drop down menu" relating to the item of the menu 12 on which the cursor 15 is placed. In this example, the reference numeral 11 is a menu function mode, item 13 is a menu item on which the cursor 15 is placed, item 14 is a function icon, and item 16 is a status indicator that indicates whether a particular function is on, off or in an automatic mode.

As shown in Figure 2, the menu 12 is displayed for each level. That is, when the top menu is displayed on an initial screen as shown in Figure 1, the function to be changed is selected from among the top menu items as described above, and the status of the function can be changed via the subsidiary menu as shown in Figure 2.

In other words, according to the conventional technique, only one menu list that is available for each menu item is displayed, and the structure of each menu is different. Therefore, the user cannot check all functions of the device on a single display screen, especially when the functions are not divided into groups. Hence, it is difficult to confirm the modes in which the functions are operating. Moreover, as shown in Figure 2, even though the functions are divided into groups, the top and subsidiary menus of a corresponding function are not displayed. Thus, it is difficult to check the top menu, identifying the general functions, when setting up a particular function in a subsidiary menu.

An apparatus, e.g. a camcorder, according to the present invention is characterised in that the control means is responsive to operation of the user input means to select an item in a first configuration menu to display concurrently therewith a second, subsidiary configuration menu and to configure the apparatus in response to operation of the user input means to select an item from the second configuration menu and to set a configuration parameter value associated therewith.

Preferably, the second menu has a parameter value indicator associated with at least one item.

Preferably, the apparatus has first and second modes of operation and at least one item of the second menu is appropriate for the first mode of operation but not the second. More preferably, said item which is not appropriate for the second mode of operation is marked as being unavailable when the second menu is displayed when the apparatus is operating in the second mode of operation.

An embodiment of the present invention will now be described, by way of example, with reference to Figures 3 to 9 of the accompanying drawings, in which:
Figures 1 and 2 are views showing screens of a conventional display unit which display the status of an electronic apparatus;
Figures 3 through 8 are views showing examples of screens of a display unit which display the status of functions of an electronic apparatus and enable a user to conveniently change the status of those functions as desired according to the present invention; and
Figure 9 is a flowchart showing an example of the steps of a menu controlling method according to the present invention.

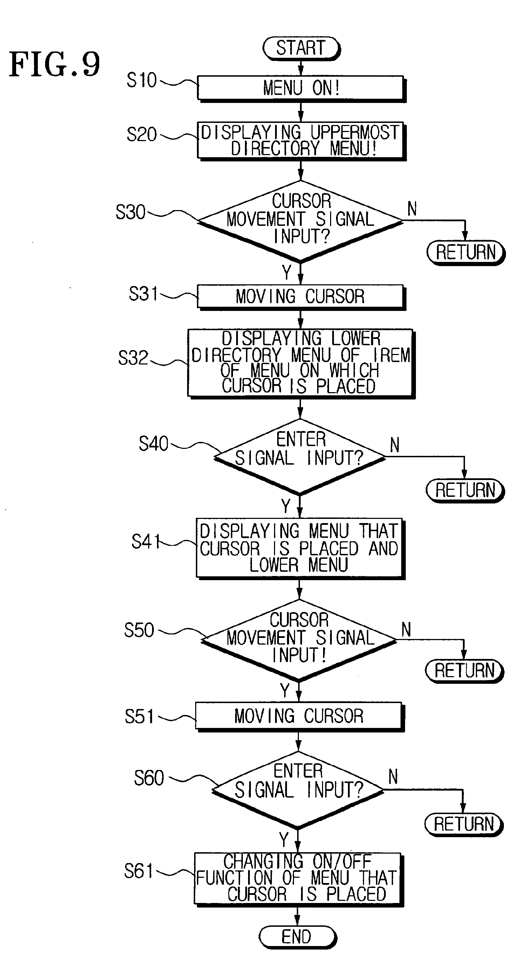

Referring to Figure 9, when the menu function is started, steps S10 and S20 are performed to display a top, directory menu list and a cursor on a display screen. Steps S30 and S31 comprising moving the cursor to a menu item of the displayed menu, in dependence on input cursor movement signals, are performed, followed by step S32 comprising displaying the menu item on which the cursor is placed and a lower directory menu relating to that menu item together on the display screen. Steps S40 and S41, comprising displaying an upper menu including the menu item on which the cursor is placed and a lower menu corresponding to the menu item on which the cursor is placed in the upper menu when an enter signal is input after step S32 has been performed, are performed. Steps S50 and S51, comprising moving the cursor to a menu item in the lower menu in dependence on cursor movement signals when the cursor movement signal is input after step S41 has been performed, are performed. Then, steps S60 and S61, comprising changing the status of the item of the lower menu on which the cursor has been placed when the enter signal is input after step S51 has been performed, are performed.

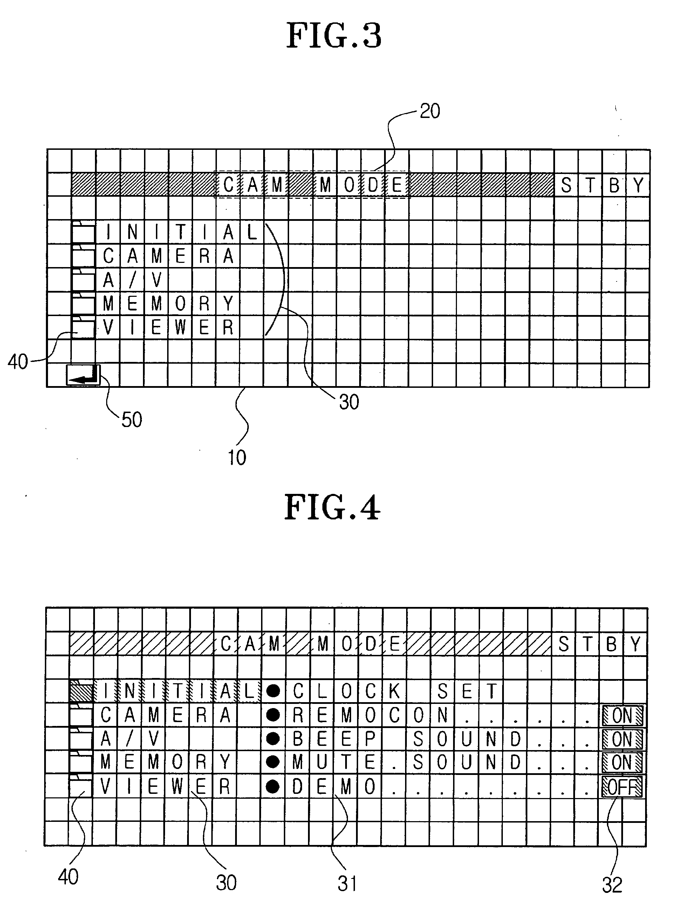

Referring to Figure 3, when the user activates the menu to set up or change a function, a top menu 30 is displayed on the display unit 10 as illustrated. The display unit 10 can be an LCD, disposed in a control panel (not shown), or a screen to display a video signal as is done by a TV or a VTR. Moreover, if the device is a camcorder, a viewfinder, which displays the scene being recorded, can be used as the display unit 10, and the menu can be displayed with the scene being captured in the viewfinder. The movement signals that control movement of the cursor 50 can be input by the user by using a dial button or a tack button. Displaying of the menu 30 can be controlled by separately disposing a menu on/off button (not shown) on the device. In the menu selection step, an operation mode 20 can also be displayed on the display screen. For example, Figure 3 shows that the camcorder is operating in a camera mode 20. The top menu 30 can further display an indication as to whether a particular menu item has been selected by displaying a folder icon 40. Moreover, the cursor 50 is displayed together with the set up mode 20, menu 30 and folder icons 40. Therefore, the user can move the cursor 50 to a desired item in the menu 30 by manipulating a cursor movement switch (not shown).

Referring to Figure 4, which shows the display unit 10 after an initial set-up item in the top menu list 30 has been selected by manipulating the cursor movement switch, the cursor 50 can be displayed by changing the colour of the background of the item in the top menu 30 that the cursor 50 is placed on or proximate to. When the cursor 50 is placed on or proximate to a particular item in the menu 30 (in this example, the "initial" menu item), a lower menu 31 relating to that item in the top menu 30 is displayed together with the top menu 30. In this example, the lower menu 31 includes the functions "CLOCK SET", "REMOCON", "BEEP SOUND", "MUTE SOUND" and "DEMO". The function set-up status of the lower menu items can be displayed using on and off icons 32. The cursor can be moved to the lower menu 31, and when the enter signal is input by manipulating a function change switch (not shown), the status of the function in the lower menu 31, that the cursor has been placed on or proximate to, can be changed, for example, to an on state or an off state.

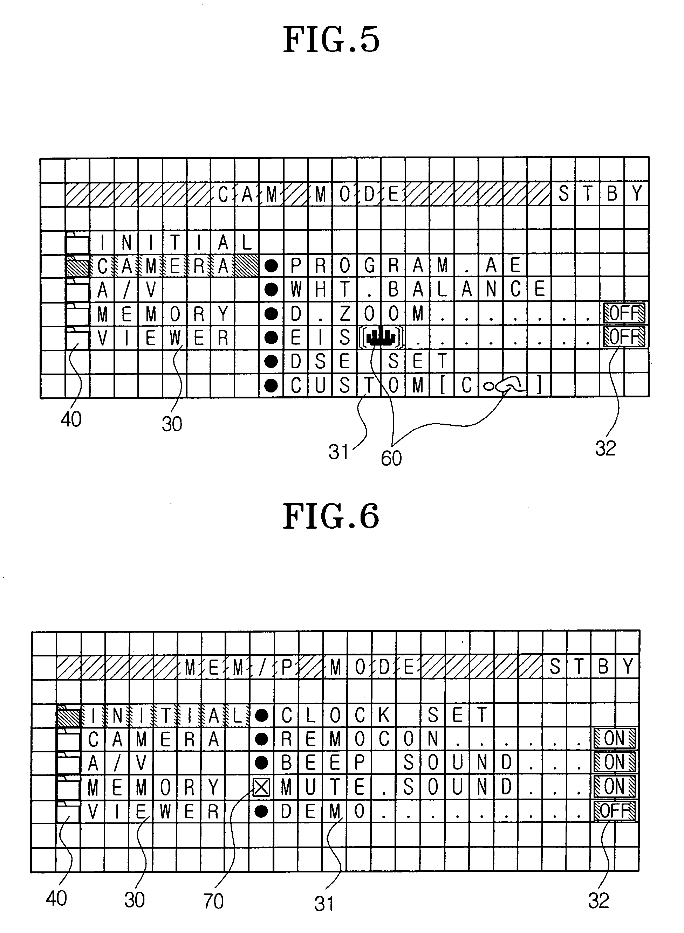

Referring to Figure 5, which shows the display unit 10 when the cursor 50 is moved to the camera menu item in the top menu 30, a function icon 60 which represents a function in the lower menu 31 can be displayed to one side of the lower menu 31. In this example, the lower menu 31 includes the functions "PROGRAM AE", "WHT. BALANCE", "D. ZOOM", "EIS", "DSE SET" and "CUSTOM". In this example, icons are displayed next to the "EIS" and "CUSTOM" functions.

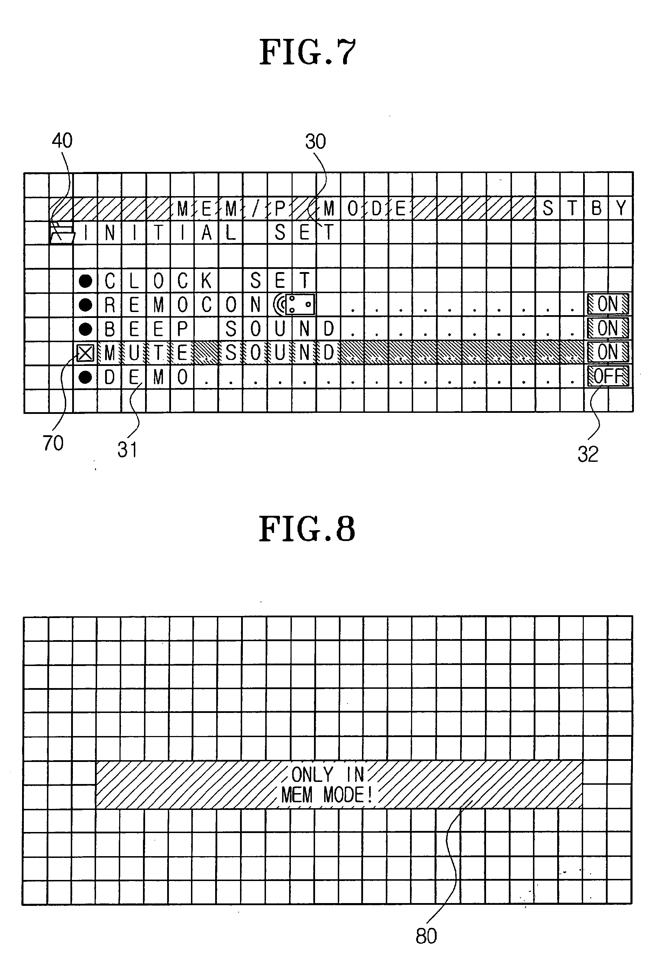

In the case of a camcorder, there are several modes such as a camera mode, a record mode, a play mode and a VCR mode, and there might be a menu item that does not correspond to a particular mode. Referring to Figures 6 and 7, which show a menu in a play mode (MEM/P MODE), the on or off state of the mute sound function cannot be changed from the initial menu. In this case, a mark 70 indicating that the set-up condition for this function cannot be changed is displayed to one side of the corresponding menu item as shown in Figures 6 and 7.

As discussed above, when the enter signal is input after the cursor 50 is placed on a particular item in the top menu 30, only the item in the top menu 30 that the cursor 50 is placed on or proximate to and a corresponding lower menu 31 are displayed as shown in Figure 7. Figure 7 shows the display unit 10 when the enter signal is input after moving the cursor 50 to the initial set-up menu in the play mode. At this time, the folder icon 40 next to the "INITIAL" function in the top menu 30, which is shown as highlighted and closed in Figure 6, is displayed as being changed to open status, and the lower menu 31 is displayed under the "INITIAL SET" function. As shown in Figure 7, the function set-up of the mute sound cannot be changed in the play mode, thus the mark 70 indicating that the status of this item cannot be changed is displayed on one side of the mute sound menu item. When the cursor is placed on a fixed menu item, such as the mute sound menu item, and the enter signal is input to change the set-up status, the other items in the OSD are turned off and a warning mark is displayed for a predetermined period as shown in Figure 8.

After the predetermined period has elapsed, the original screen is displayed as shown in Figure 7.

In accordance with the disclosed embodiments of the present invention, when the menu is started, the uppermost item in the directory menu list 30 among the menu that has been set up as a tree structure for function is displayed, and the uppermost directory menu 30 and the lower menu list 31 are displayed together as controlled by the cursor as discussed above. As described above, the user can check all functions on one screen because the upper menu list 30 and the corresponding lower menu 31 are displayed together. Moreover, the user can check the states of the functions listed in the lower menu 31. In addition, the user can change the status of a function in the corresponding menu 31 by inputting the enter signal when the cursor 50 is placed on or proximate to the desired function in the corresponding menu 31. The enter signal can be input by manipulating a separately disposed button, or a voice recognition device can be disposed to allow the user to input the enter signal with his or her voice without separate manipulation.

According to the embodiments of the present invention described above, because the lower menus items are grouped like the contents of "directories" listed in the top menu and all functions are displayed as a tree structure by the OSD, the user can check a corresponding upper and lower menus and a function status mode at the same time. Furthermore, the user can check the function that the device is performing in an upper menu. Thus, it is very convenient for the user to view the available functions, and the user also can change the status of the functions very easily.

## Claims

1. An electronic apparatus having a control means, a display and user input means, the control means being responsive to operation of the user input means to display a configuration menu (30, 31) on the display and to configure the apparatus in response to operation of the user input means to select a menu item and to set a configuration parameter value, **characterised in that** the control means is responsive to operation of the user input means to select an item in a first configuration menu (30) to display concurrently therewith a second, subsidiary configuration menu (31) and to configure the apparatus in response to operation of the user input means to select an item from the second configuration menu (31) and to set a configuration parameter value associated therewith.

2. An electronic apparatus according to claim 1, wherein the second menu (31) has a parameter value indicator (32) associated with at least one item.

3. An electronic apparatus according to claim 1 or 2, having first and second modes of operation, wherein at least one item of the second menu (31) is appropriate for the first mode of operation but not the second.

4. An electronic apparatus according to claim 3, wherein said item which is not appropriate for the second mode of operation is marked (70) as being unavailable when the second menu (31) is displayed when the apparatus is operating in the second mode of operation.

5. A camcorder according to any preceding claim.

6. A camcorder according to claim 5, wherein the display is a viewfinder.

7. A method for controlling an electronic device having a display screen, the method comprising:
displaying a first menu of a directory of functions of the device and a cursor on the on the display screen;
moving the cursor to select an item among those in the first menu displayed in accordance with a cursor movement signal;
displaying on the display screen a second menu relating to the item of the first menu that the cursor selects when a selection signal is input;
moving the cursor to select an item among the second menu; and
changing a function of the electronic device represented by the item in the second menu that the selected.

8. The method of claim 7, wherein at least a portion of the first menu and at least a portion of the second menu are displayed concurrently on the display screen when the cursor is moved to select an item in the first menu.

9. The method of claim 7, further comprising displaying respective folder icons proximate to each item in the first menu.

10. The method of claim 9, further comprising changing an appearance of the folder icon relating to the selected item in the first menu after that item is selected.

11. The method of claim 7, wherein the step of displaying the second menu displays each item of the second menu on one side of the first menu on the display screen.

12. The method of claim 7, further comprising displaying a respective function status indication pertaining to each item in the second menu.

13. The method of claim 7, further comprising displaying a respective symbol pertaining to an item in the second menu whose function is fixed.

14. The method of claim 13, further comprising displaying a warning message when the cursor attempts to select the item in the second menu whose function is fixed.

15. The method of claim 14, wherein the warning message is displayed on the display screen for a period during which the display screen discontinues displaying any portion of the first and second menus.

16. The method of claim 15, further comprising redisplaying the second menu and at least a portion of the first menu after discontinuing to display the warning message after the period has elapsed.

17. An apparatus for controlling an electronic device having a display screen, the apparatus comprising:
a display screen, adapted to display a first menu of a directory of functions of the device and a cursor; and
a control device, adapted to move the cursor to select an item among those in the first menu displayed in accordance with a cursor movement signal;
the display screen being further adapted to display on the display screen a second menu relating to the item of the first menu that the cursor selects when a selection signal is input from the control device; and
the control device being further adapted to move the cursor to select an item among the second menu, and to change a function of the electronic device represented by the item in the second menu that the cursor selected.

18. The apparatus of claim 17, wherein at least a portion of the first menu and at least a portion of the second menu are displayed concurrently on the display screen when the cursor is moved to select an item in the first menu.

19. The apparatus of claim 17, wherein the display screen is further adapted to display respective folder icons proximate to each item in the first menu.

20. The apparatus of claim 19, wherein the display screen is further adapted to change an appearance of the folder icon relating to the selected item in the first menu after that item is selected.

21. The apparatus of claim 17, wherein the display screen is further adapted to display each item of the second menu on one side of the first menu on the display screen.

22. The apparatus of claim 17, wherein the display screen is further adapted to display a respective function status indication pertaining to each item in the second menu.

23. The apparatus of claim 17, wherein the display screen is further adapted to display a respective symbol pertaining to an item in the second menu whose function is fixed.

24. The apparatus of claim 23, wherein the display screen is further adapted to display a warning message when the cursor attempts to select the item in the second menu whose function is fixed.

25. The apparatus of claim 24, wherein the warning message is displayed on the display screen for a period during which the display screen discontinues displaying any portion of the first and second menus.

26. The apparatus of claim 25, wherein the display screen is further adapted to redisplay the second menu and at least a portion of the first menu after discontinuing to display the warning message after the period has elapsed.
